# EUROPÄISCHE PATENTSCHRIFT

(11) **EP 1 963 700 B1**
(45) Veröffentlichungstag und Bekanntmachung des Hinweises auf die Patenterteilung: **07.10.2009**
(21) Anmeldenummer: 06807646.2
(22) Anmeldetag: 30.10.2006
(51) Int. Cl.: F16D 51/22, F16D 65/22

(54) **TROMMELBREMSE**
DRUM BRAKE
FREIN A TAMBOUR

(30) Priorität: 14.12.2005 DE 102005059590
(43) Veröffentlichungstag der Anmeldung: 03.09.2008
(73) Patentinhaber: ROBERT BOSCH GMBH, 70442 Stuttgart (DE)
(72) Erfinder: HOFMANN, Dirk, 70439 Stuttgart (DE); NAGEL, Willi, 71686 Remseck/Hochdorf (DE); KRIESE, Oliver, 87527 Sonthofen (DE)
(86) Internationale Anmeldenummer: PCT/EP2006/067917
(87) Internationale Veröffentlichungsnummer: WO 2007/068529

(56) Entgegenhaltungen:
- WO-A-99/28649
- US-A- 1 175 286
- US-A- 2 096 854
- US-A- 6 119 822
- US-A1- 2003 066 721

## Beschreibung

### Stand der Technik

Die Erfindung betrifft eine Trommelbremse. Trommelbremsen sind an sich bekannt. Sie weisen zwei Bremsbacken auf, die zur Betätigung der Trommelbremse mit einer Betätigungseinrichtung gegen eine Bremstrommel drückbar sind. Die Betätigungseinrichtung kann beispielsweise hydraulisch oder mechanisch sein, sie kann beispielsweise einen schwenkbaren Doppelnocken aufweisen, der die beiden Bremsbacken an einem Ende auseinander und gegen die Bremstrommel drückt.

In den Entgegenhaltungen US 6,119,822 A; US 1,175,286 A; WO 99/28649 A1 und der US 2003/0066721 A1 werden Trommelbremsen offenbart, deren Bremsbacken unmittelbar durch eine Betätigungseinrichtung beaufschlagt sind und die im Falle ihrer Betätigung eine Schwenkbewegung um einen Drehpunkt ausführen. In Abhängigkeit der Drehrichtung der Bremstrommeln ist deshalb zwischen Bremsbacken zu unterscheiden, welche auf die jeweilige Bremstrommel auflaufen und welchen, die von dieser Bremstrommel ablaufen. Keine dieser Entgegenhaltungen weist Bremsbacken nach, die radial zur Bremstrommel verschieblich auf einer Trägerplatte geführt sind.

Die US 2,096,854 A offenbart in Figur 8 eine Trommelbremse, bei der Bremsbacken durch mehrere, einander gegenüberliegend angeordnete Betätigungseinheiten betätigt werden. Die Bremsbacken führen dadurch eine Linearbewegung relativ zur Bremstrommel aus, sind aber nicht verschieblich an einer Trägerplatte geführt. Wie beim restlichen Stand der Technik findet zudem eine unmittelbare Betätigung der Bremsbacken durch die Betätigungseinheiten statt.

### Erläuterung und Vorteile der Erfindung

Die Betätigungseinrichtung der erfindungsgemäßen Trommelbremse mit den Merkmalen des Anspruchs 1 weist ein drehend antreibbares Zahnrad und zwei Zahnstangen auf, die auf gegenüber liegenden Seiten mit dem Zahnrad kämmen und von denen jede mit einer der beiden Bremsbacken der Trommelbremse gekoppelt ist. Die beiden Zahnstangen müssen nicht zwingend exakt gegenüber liegend, mit dem Zahnrad kämmen und nicht parallel zueinander verlaufen, eine Winkelabweichung ist möglich. Durch Drehen des Zahnrads werden die Zahnstangen gegenläufig bewegt und drücken die Bremsbacken gegen die Bremstrommel bzw. heben bei umgekehrter Drehrichtung des Zahnrads die Bremsbacken von der Bremstrommel ab. Ein Vorteil der Erfindung ist somit die Möglichkeit, dass die Bremsbacken aktiv von der Bremstrommel abgehoben werden können, d. h. die Trommelbremse kann aktiv mit der Betätigungseinrichtung gelöst werden. Ein weiterer Vorteil im Vergleich mit einer Nockenbetätigung sind eine verringerte Reibung innerhalb der Betätigungseinrichtung und eine verringerte Hysterese beim Betätigen und Lösen der Trommelbremse. Ein zusätzlicher Vorteil der Erfindung ist eine vereinfachte und stufenlose Verschleißnachstellung, indem das Zahnrad beim Lösen der Trommelbremse um einen bestimmten Drehwinkel und nicht bis in seine Ausgangsstellung zurück gedreht wird.

Die Erfindung sieht vor, dass die Bremsbacken der Trommelbremse radial zur Bremstrommel verschieblich an einer Trägerplatte geführt sind. Die Trommelbremse weist dadurch keine auf- und ablaufenden Bremsbacken auf, die eine Selbstverstärkung bzw. eine Selbstschwächung bewirken und unterschiedlichen Belagverschleiß der auf- und der ablaufenden Bremsbacke sowie unterschiedliche Andruckkräfte zur Folge haben. Die radial verschiebliche Führung der Bremsbacken bewirkt eine gleichmäßige und symmetrische Beanspruchung der Betätigungseinrichtung und einen gleichmäßigen Belagverschleiß der Bremsbeläge beider Bremsbacken. Ein weiterer und erheblicher Vorteil der radial verschieblich geführten Bremsbacken ist eine verringerte Empfindlichkeit des Bremsenkennwertes C* der erfindungsgemäßen Trommelbremse bei Reibwertschwankungen. Der Bremsenkennwert C* ist das Verhältnis der an der Bremstrommel wirksamen Bremskraft (Umfangskraft) und der Andruckkraft der Bremsbacken gegen die Bremstrommel. Eine Änderung des Bremsenkennwerts bei einer Änderung des Reibwerts ist kleiner, d.h. das Verhältnis ΔC*/Δµ ist konstanter als bei herkömmlichen Trommelbremsen mit auflaufender und ablaufender Bremsbacke oder auch bei Duplexbremsen mit zwei auf laufenden Bremsbacken. Dadurch ist eine Steuerung oder Regelung einer Bremskraft der erfindungsgemäßen Trommelbremse vereinfacht. Insbesondere Blockierschutz- und Schlupfregelungen wie Bremsblockierschutz-, Antriebsschlupf- und Fahrdynamikregelungen (ABS*; ASR, FDR, ESP) sind bei erhöhter Konstanz des Bremsenkennwerts C* erheblich vereinfacht gegenüber starker Nichtlinearität.

Die Unteransprüche haben vorteilhafte Ausgestaltungen und Weiterbildungen der im Anspruch 1 angegebenen Erfindung zum Gegenstand.

Gemäß Anspruch 5 weist die Betätigungseinrichtung der erfindungsgemäßen Trommelbremse ausschließlich lineare Übertragungsglieder auf. Das hat zur Folge, dass ein Antriebsmoment der Betätigungseinrichtung einer Andruckkraft der Bremsbacken an die Bremstrommel proportional ist, wenn von Reibungs- und Hystereseeffekten abgesehen wird. Eine Bremskraft der erfindungsgemäßen Trommelbremse ist dadurch einfacher steuer- oder regelbar. Es muss nicht die Andruckkraft der Bremsbacken gegen die Bremstrommel unmittelbar gemessen werden, sondern es kann beispielsweise ein Antriebsmoment eines das Zahnrad antreibenden Elektromotors zur Steuerung oder Regelung einer Bremskraft der Trommelbremse herangezogen werden.

Anspruch 6 sieht eine Feststelleinrichtung vor, mit der die Betätigungseinrichtung in ihrer jeweiligen Stellung feststellbar ist. Es kann sich dabei beispielsweise um eine Magnetbremse oder um einen schaltbaren Freilauf handeln, der in eingeschaltetem Zustand die Betätigungseinrichtung gegen ein Rückdrehen des mit den Zahnstangen kämmenden Zahnrads in Löserichtung sperrt. Die Feststelleinrichtung kann mono- oder bistabil sein. Mit ihr lässt sich zum einen zur Verschleißnachstellung das Lüftspiel einstellen, indem die Betätigungseinrichtung beim oder nach einem Lösen der Trommelbremse bei Erreichen eines vorgegebenen Lüftspiels festgestellt wird. Zum anderen bildet die Feststelleinrichtung der Betätigungseinrichtung die Trommelbremse zu einer Feststellbremse (Parkbremse) aus, sie ist strom- bzw. energielos in betätigter Stellung feststellbar.

### Zeichnung

Die Erfindung wird nachfolgend anhand in der Zeichnung dargestellter Ausführungsbeispiele näher erläutert. Es zeigen:
- Figur 1: eine erfindungsgemäße Trommelbremse in Ansicht;
- Figur 2: eine Betätigungseinrichtung der Trommelbremse aus Figur 1;
- Figur 3: einen Teil der Betätigungseinrichtung der Trommelbremse gemäß Pfeil III in Figur 1 in größerer Darstellung;
- Figur 4: eine abgewandelte Betätigungseinrichtung der Trommelbremse in einer Figur 3 entsprechenden Darstellung gemäß der Erfindung; und
- Figur 5: eine weitere abgewandelte Betätigungseinrichtung der Trommelbremse in einer Figur 3 entsprechenden Darstellung gemäß der Erfindung.

### Beschreibung der Ausführungsbeispiele

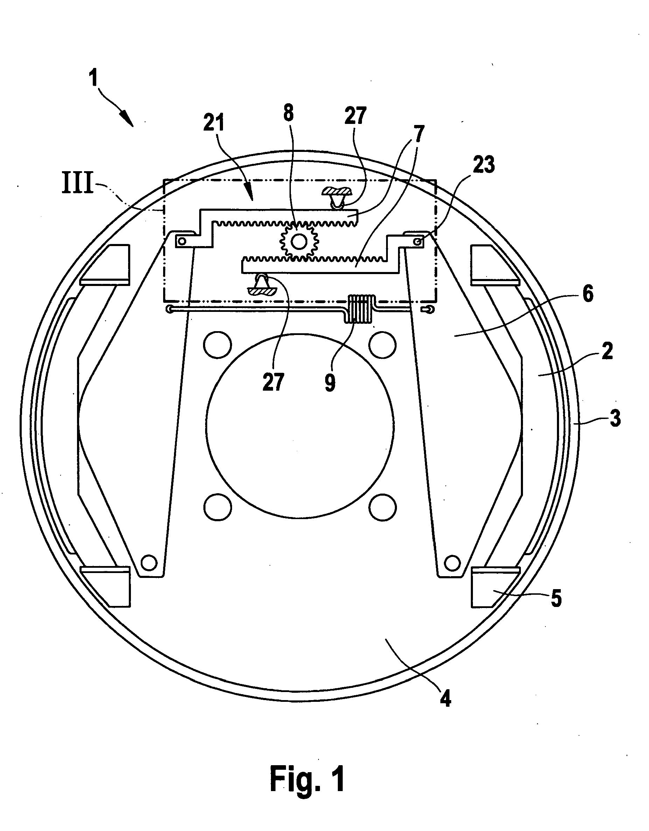

Die in Figur 1 dargestellte erfindungsgemäße Trommelbremse 1 weist zwei einander gegenüber angeordnete Bremsbacken 2 auf, die zur Betätigung der Trommelbremse 1 nach außen gegen einen Innenumfang einer Bremstrommel 3 drückbar sind. Die Bremsbacken 2 sind radial zur Bremstrommel 3 verschieblich auf einer kreislochscheibenförmigen Trägerplatte 4 der Trommelbremse 1 geführt. Dazu weist die Trägerplatte 4 Lagerklötze 5 auf, die an Enden der Bremsbacken 2 angeordnet sind und die die Bremsbacken 2 radial verschieblich führen.

Um die Bremsbacken 2 nach außen gegen die Bremstrommel 3 zu drücken, weist die Trommelbremse 1 Betätigungshebel 6 auf, die radial innerhalb der Bremsbacken 2 angeordnet sind. Die Betätigungshebel 6 sind an einem Ende schwenkbar an der Trägerplatte 4 gelagert. Die anderen Enden der Betätigungshebel 6 sind mit jeweils einer Zahnstange 7 schwenkbar verbunden, d. h. die Betätigungshebel 6 sind mit den Zahnstangen 7 gekoppelt. Die Zahnstangen 7 sind bezüglich eines zwischen ihnen angeordneten Zahnrads 8 einander gegenüber und parallel zueinander angeordnet. Die Zahnstangen 7 kämmen an einander gegenüberliegenden Umfangsstellen mit dem Zahnrad 8. Durch drehenden Antrieb des Zahnrads 8 werden die Zahnstangen 7 gegenläufig verschoben und drücken die beiden Betätigungshebel 6 auseinander. Die Betätigungshebel 6 drücken die Bremsbacken 2 nach außen gegen die Bremstrommel 3, so dass die Bremstrommel 3 gebremst wird. Die Trommelbremse 1 ist betätigt. Bei umgekehrter Drehrichtung des Zahnrads 8 ziehen die Zahnstangen 7 die Betätigungshebel 6 nach innen zurück in eine Ausgangslage. Die Trommelbremse 1 wird dadurch gelöst. Zusätzlich ist ein Federelement 9 in Form einer Schraubenzugfeder vorgesehen, die in die beiden Betätigungshebel 6 eingehängt ist und diese zusammen, d. h. nach innen zieht.

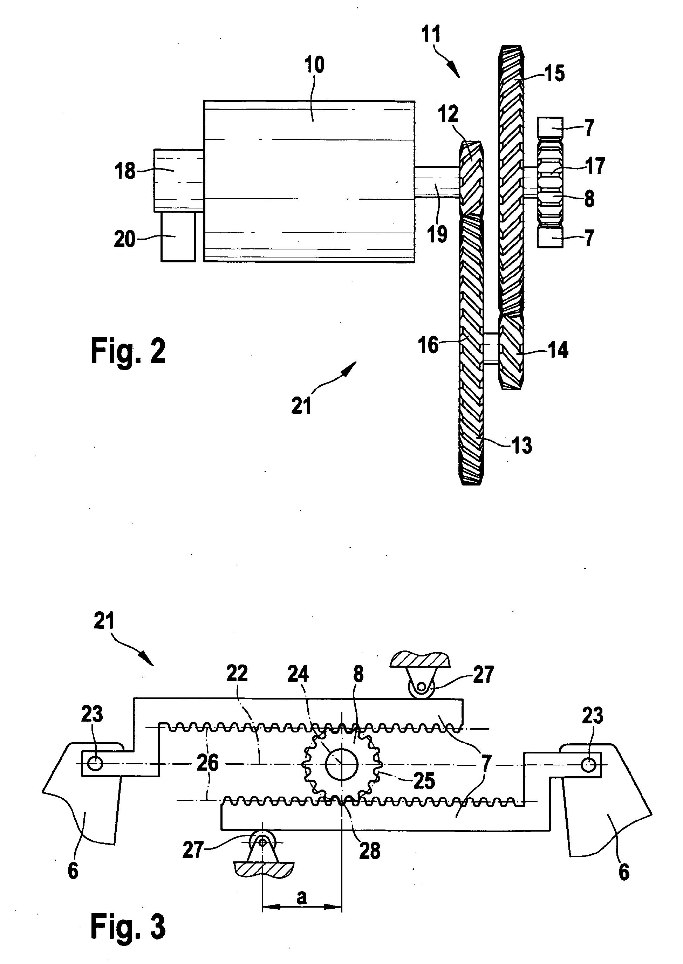

Zum drehenden Antrieb des Zahnrads 8 weist die Trommelbremse 1 den in Figur 2 dargestellten Elektromotor 10 auf, der das Zahnrad 8 über ein Untersetzungsgetriebe 11 drehend antreibt. Das Untersetzungsgetriebe 11 ist ein zweistufiges Stirnzahnradgetriebe mit den vier Zahnrädern 12 bis 15. Das mit den Zahnstangen 7 kämmende Zahnrad 8 ist drehfest mit einem Abtriebszahnrad 15 des Untersetzungsgetriebes 11. Die Zahnräder 12 bis 15 des Untersetzungsgetriebes 11 weisen Schrägverzahnungen 16 auf. Das hat den Vorteil einer besseren Laufruhe, geringerer Geräuschentwicklung und einer gleichmäßigeren Übertragung des Drehmoments. Im Gegensatz dazu weisen das mit den Zahnstangen 7 kämmende Zahnrad 8 und die Zahnstangen 7 Geradverzahnungen 17 auf. Dadurch wird eine Querkraftkomponente beim Antrieb der Zahnstangen 7 durch das Zahnrad 8 vermieden. Die Zahnstangen 7 müssen nicht gegen Querkräfte abgestützt werden.

Am Elektromotor 10 ist ein schaltbarer Freilauf 18 angeflanscht, der auf eine Motorwelle 19 des Elektromotors 10 wirkt. In eingeschalteter Stellung sperrt der Freilauf 18 die Motorwelle 19 gegen ein Rückdrehen im Sinne eines Lösens der Trommelbremse 1. Eine aufgebrachte Bremskraft bleibt bei unbestromtem Elektromotor 10 aufrecht erhalten. Die Trommelbremse 1 ist dadurch außer als Betriebs- auch als Feststellbremse verwendbar. Der Freilauf 18 bildet eine Feststelleinrichtung der Trommelbremse 1. Auch ein Lüftspiel zwischen den Bremsbacken 2 und der Bremstrommel 3 ist mittels des Freilaufs 18 einstellbar, indem beim Lösen der Trommelbremse 1 die Motorwelle 19 mittels des Freilaufs 18 gegen ein weiteres Rückdrehen in Löserichtung der Trommelbremse 1 gesperrt wird, wenn ein gewünschtes Lüftspiel erreicht ist. Zum Ausschalten weist der Freilauf 18 einen Hubmagneten 20 auf. Bei bestromtem Hubmagneten 20 ist der Freilauf 18 ausgeschaltet, d. h. die Motorwelle 19 ist in beiden Drehrichtungen frei drehbar. Bei eingeschaltetem Freilauf 18, also bei unbestromtem Hubmagneten 20, ist die Motorwelle 19 nur in einer Zuspannrichtung drehbar, in der die Bremsbacken 2 nach außen gedrückt werden und die Trommelbremse 1 betätigt wird. Der Freilauf 18 ist monostabil, seine eingeschaltete Stellung ist stabil. Es kann auch ein bistabiler Freilauf 18 Verwendung finden, bei dem der Hubmagnet 20 nur zum Umschalten von der einen in die andere Stellung bestromt werden muss. Solche Freiläufe 18 sind an sich bekannt, beispielhaft wird auf die DE 102 55 192 A1 verwiesen.

Der Elektromotor 10 mit dem angeflanschten Freilauf 18, das Untersetzungsgetriebe 11, die Zahnstangen 7 und das mit ihnen kämmende Zahnrad 8 bilden eine elektromechanische Betätigungseinrichtung 21 der Trommelbremse 1.

Wie in Figur 3 zu sehen, sind die beiden Zahnstangen 7 so gekröpft, dass sie eine gemeinsame gedachte Wirkungslinie 22 aufweisen. Die Wirkungslinie 22 ist eine Gerade, die durch Schwenklager 23 geht, die die Zahnstangen 7 gelenkig mit den Betätigungshebeln 6 der Trommelbremse 1 verbinden. Die Wirkungslinie 22 gibt die Richtung der Betätigungskräfte an, die die Zahnstangen 7 bei Betätigung der Trommelbremse 1 auf die Betätigungshebel 6 ausüben. Dadurch dass die von den Zahnstangen 7 auf die Betätigungshebel 6 ausgeübten Betätigungskräfte keinen Versatz zueinander, sondern eine gemeinsame Wirkungslinie 22 aufweisen, sind die auf die Betätigungshebel 6 ausgeübten Betätigungskräfte und wegen des symmetrischen Aufbaues der Betätigungshebel 6 und der Bremsbacken 2 die auf die Bremsbacken 2 ausgeübten Andruckkräfte gleich groß, beide Bremsbacken 2 werden mit gleicher Andruckkraft gegen die Bremstrommel 3 gedrückt. Die Kröpfung der Zahnstangen 7 ist in Figur 3 so gewählt, dass die Wirkungslinie 22 der von den Zahnstangen 7 auf die Betätigungshebel 6 ausgeübten Betätigungskräfte eine Drehachse 24 des mit den Zahnstangen 7 kämmenden Zahnrads 8 schneidet. Dadurch wird ein symmetrischer Aufbau der Betätigungseinrichtung auch im Bereich der Zahnstangen 7 und des mit ihnen kämmenden Zahnrads 8 erreicht. Durch die Kröpfung der Zahnstangen 7 bewirkt eine Betätigung der Trommelbremse 1 ein Moment auf die Zahnstangen 7. Dieses Moment resultiert aus einem Versatz der Betätigungskräfte, die an den Schwenklagern 23 der Zahnstangen 7 angreifen, und Antriebskräften, die das Zahnrad 8 auf die Zahnstangen 7 ausübt. Die Antriebskräfte greifen an einem Wälzkreis 25 des Zahnrads 8 und an einer Wälzlinie 26 der Zahnstangen 7 an.

Die Trommelbremse 1 weist eine Wälzlagerung 27 für die Zahnstangen 7 auf, die in Bezug auf das mit den Zahnstangen 7 kämmende Zahnrad 8, mit dem die jeweilige Zahnstange 7 gekoppelt ist, zu einer dem Betätigungshebel 6 abgewandten Seite hin versetzt angeordnet ist. Der Versatz a der Wälzlagerung 27 von einer Eingriffsstelle 28 der Zahnstange 7 am Zahnrad 8 bewirkt, dass das von der Betätigungskraft auf die Zahnstange 7 bewirkte Moment die Zahnstange 7 in Eingriff mit dem Zahnrad 8 hält. Das Moment bewirkt, dass die Zahnstange 7 zum Zahnrad 8 gedrückt wird. Der Versatz a ist so groß gewählt, dass die vom Zahnrad 8 auf die Zahnstange 7 ausgeübte Antriebskraft, die wegen der Zahnform des Zahnrads 8 und der Zahnstange 7 eine Komponente vom Zahnrad 8 weg aufweist, ausgeglichen oder überkompensiert wird. Zur Geradführung der Zahnstange 7 genügt damit zumindest theoretisch die eine Wälzlagerung 27.

Zusätzliche konstruktive Führungselemente oder Lagerstellen der Zahnstange 7 (nicht dargestellt) sind dadurch nicht ausgeschlossen. Mit der Eingriffsstelle 28 des Zahnrads 8 an der Zahnstange 7 ist genau genommen der geometrische Berührpunkt eines Wälzkreises 25 des Zahnrads 8 mit einer Wälzlinie 26 der Zahnstange 7 gemeint.

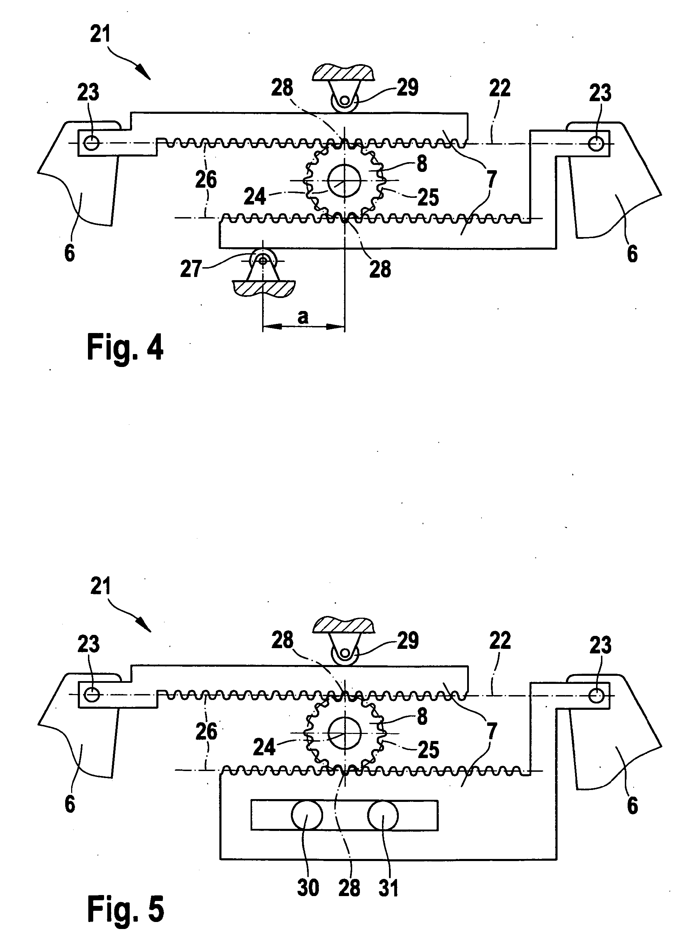

Bei der in Figur 4 dargestellten Abwandlung der Erfindung ist die Kröpfung der Zahnstangen 7 geändert. Die Kröpfung der einen in Figur 4 oben gezeichneten Zahnstange 7 ist so gewählt, dass die Wirkungslinie 22 der von der Zahnstange 7 auf den Betätigungshebel 6 ausgeübten Betätigungskraft tangential zum Wälzkreis 25 des mit den beiden Zahnstangen 7 kämmenden Zahnrads 8 verläuft. Diese Zahnstange 7 ist dadurch momentenfrei, sie wird ausschließlich auf Zug oder Druck und nicht auf Biegung beansprucht und braucht zu ihrer Linear- oder Geradführung theoretisch nur in Eingriff mit dem Zahnrad 8 gehalten werden. Zu diesem Zweck ist eine Wälzlagerung 29 vorgesehen, die die Zahnstange 7 auf einer dem Zahnrad 8 abgewandten Seite abstützt. Die Wälzlagerung 29 ist auf einer gedachten Radialen des mit der Zahnstange 7 kämmenden Zahnrads 8 durch die Eingriffsstelle 28 der Zahnstange 7 mit dem Zahnrad 8 angeordnet. Auch hier sind zusätzliche Führungselemente zur Linear- bzw. Geradführung der Zahnstange 7 möglich, jedoch nicht dargestellt.

Die Kröpfung der zweiten, in Figur 4 unten dargestellten Zahnstange 7 ist in Figur 4 im Vergleich mit Figur 3 vergrößert, so dass die Wirkungslinien 22 der von den Zahnstangen 7 auf die Betätigungshebel 6 ausgeübten Betätigungskräfte wiederum auf einer Linie liegen. Diese Linie oder Gerade ist die vorstehend zu der in Figur 4 oben dargestellten Zahnstange 7 erläuterte Tangente zum Wälzkreis 25 des mit den beiden Zahnstangen 7 kämmenden Zahnrads 8. Dadurch ergeben sich die bereits zu Figur 3 erläuterten symmetrischen Verhältnisse in Bezug sowohl auf das Zahnrad 8 als auch auf die Betätigungshebel 6. Die vom Zahnrad 8 auf die beiden Zahnstangen 7 ausgeübten Antriebskräfte sind ebenso wie die von den Zahnstangen 7 auf die mit ihnen gekoppelten Betätigungshebel 6 ausgeübten Betätigungskräfte gleich groß. Am Zahnrad 8 wirkt dadurch ausschließlich ein Moment und keine Kraft quer zu seiner Drehachse 24, die abgestützt werden müsste. Die auf die Betätigungshebel 6 ausgeübten Kräfte und damit auch die Andruckkräfte der Bremsbacken 2 gegen die Bremstrommel 3 sind ebenfalls gleich groß.

Eine Wälzlagerung 27 der in Figur 4 unten dargestellten Zahnstange 7 mit der größeren Kröpfung ist wie zu Figur 3 erläutert um die Strecke a bezüglich der Eingriffsstelle 28 der Zahnstange 7 mit dem Zahnrad 8 vom Betätigungshebel 6 weg versetzt. Der Versatz a ist wieder so groß gewählt, dass das Moment, welches die von der Zahnstange 7 auf den Betätigungshebel 6 ausgeübte Betätigungskraft und die entsprechend der Kröpfung der Zahnstange 7 dazu versetzt angreifende Antriebskraft des Zahnrads 8 auf die Zahnstange 7 bewirken, die Zahnstange 7 am Zahnrad 8 in Eingriff hält. Auch hier können zusätzliche Wälzlagerungen und/oder Schiebeführungen für die Zahnstange 7 in der Praxis sinnvoll sein (nicht dargestellt). Im Übrigen gelten hinsichtlich Figur 4 die Ausführungen zu Figur 3, auf die zur Vermeidung von Wiederholungen insoweit verwiesen wird. Für gleiche Bauteile werden gleiche Bezugszahlen verwendet.

Figur 5 zeigt eine Abwandlung von Figur 4. Die oben dargestellte Zahnstange 7 ist gleich wie in Figur 4 dargestellt ausgebildet, ihre Kröpfung ist so gewählt, dass die Wirkungslinie 22 der von der Zahnstange 7 auf den Betätigungshebel 6 ausgeübte Betätigungskraft tangential zum Wälzkreis 25 des Zahnrads 8 ist. Die Wälzlagerung 29 der Zahnstange 7 ist in Figur 5 wie in Figur 4 auf einer gedachten Radialen des Zahnrads 8 durch die Eingriffsstelle 28 mit der Zahnstange 7 angeordnet.

Auch die Kröpfung der in Figur 5 unten dargestellten Zahnstange 7 ist wie in Figur 4 so groß, dass die Wirkungslinien 22 der von den Zahnstangen 7 auf die Betätigungshebel 6 ausgeübten Betätigungskräfte auf einer gemeinsamen Geraden, und zwar einer Tangente zum Wälzkreis 25 des Zahnrads 8 liegen. Lediglich die Geradführung der in Figur 5 unten dargestellten Zahnstange 7 ist im Vergleich mit Figuren 3 und 4 geändert: Die Zahnstange 7 ist als Rahmen ausgebildet, in dem zwei Wälzlagerungen 30, 31 vorgesehen sind, die die Zahnstange 7 zwangsweise gerade und tangential zum Zahnrad 8 führen und die Zahnstange 7 mit dem Zahnrad 8 in Eingriff halten. Im Übrigen wird zur Erläuterung von Figur 5 auf die Erläuterungen zu Figuren 3 und 4 verwiesen. Die Wälzlagerungen 30, 31 sind beiderseits der Eingriffsstelle 28 des Zahnrads 8 mit der Zahnstange 7 angeordnet, d. h. sie sind in beiden Richtungen zur Eingriffsstelle 28 versetzt.

Anstelle der Wälzlagerung 27, 29, 30, 31 sind an sich auch Gleitlagerungen als Führungen der Zahnstangen 7 möglich, die die Zahnstangen 7 abstützen und in Eingriff mit dem Zahnrad 8 halten (nicht dargestellt). Wegen der geringeren Reibung sind die Wälzlagerungen 27, 28, 30, 31 bevorzugt.

Die Betätigungseinrichtung 21 der Trommelbremse 1 weist mit dem Zahnradgetriebe 11 und den mit dem Zahnrad 8 kämmenden Zahnstangen 7 ausschließlich lineare Übertragungsglieder auf. Ein Antriebsmoment des Elektromotors 10 ist der Andruckkraft der Bremsbacken 2 an die Bremstrommel 3 proportional. Eine Steuerung oder Regelung der Bremskraft der Trommelbremse 1 ist dadurch vereinfacht insbesondere im Hinblick auf eine Blockierschutz- oder Schlupfregelung.

## Patentansprüche

1. Trommelbremse mit zwei Bremsbacken (2), die zur Betätigung der Trommelbremse (1) mit einer Betätigungseinrichtung (21) gegen eine Bremstrommel (3) drückbar sind, wobei die Betätigungseinrichtung (21) ein drehend antreibbares Zahnrad (8) und zwei Zahnstangen (7) aufweist, die auf gegenüberliegenden Seiten mit dem Zahnrad (8) kämmen **dadurch gekennzeichnet, dass** die Zahnstangen (7) an einem Ende mit an anderen Ende schwenkbar an einer Trägerplatte (4) gelagerten Betätigungshebeln (6) gekoppelt sind, die auf Bremsbacken (2) einwirken, welche radial zur Bremstrommel (3) verschieblich auf der Trägerplatte (4) geführt sind.

2. Trommelbremse nach Anspruch 1, **dadurch gekennzeichnet, dass** die Zahnstangen (7) und das mit ihnen kämmende Zahnrad (8) Geradverzahnungen (17) aufweisen.

3. Trommelbremse nach Anspruch 1, **dadurch gekennzeichnet, dass** die Zahnstangen (7) Geradführungen (27, 29, 30, 31) in tangentialer Richtung des mit ihnen kämmenden Zahnrads (8) aufweisen.

4. Trommelbremse nach Anspruch 1, **dadurch gekennzeichnet, dass** die Betätigungseinrichtung (21) ein Zahnradgetriebe (11) mit Schrägverzahnungen (16) aufweist.

5. Trommelbremse nach Anspruch 1, **dadurch gekennzeichnet, dass** die Betätigungseinrichtung (21) ausschließlich lineare Übertragungsglieder aufweist.

6. Trommelbremse nach Anspruch 1, **dadurch gekennzeichnet, dass** die Betätigungseinrichtung (21) eine Feststelleinrichtung (18, 20) aufweist.

7. Trommelbremse nach Anspruch 1, **dadurch gekennzeichnet, dass** die Wirkungslinien (22) der Betätigungskräfte, die die beiden Zahnstangen (7) bei Betätigung der Trommelbremse (1) auf die Bremsbacken (2) ausüben, auf einer Linie liegen.

8. Trommelbremse nach Anspruch 1, **dadurch gekennzeichnet, dass** eine Wirkungslinie (22) einer Betätigungskraft, die eine der beiden Zahnstangen (7) bei Betätigung der Trommelbremse (1) auf die mit ihr gekoppelte Bremsbacke (2) ausübt, tangential zu einem Wälzkreis (25) des mit den beiden Zahnstangen (7) kämmenden Zahnrads (8) verläuft.

9. Trommelbremse nach Anspruch 8, **dadurch gekennzeichnet, dass** die Zahnstange (7) eine Wälzlagerung (29) auf einer gedachten Radialen des Zahnrads (8), das mit der Zahnstange (7) kämmt, am Berührpunkt (28) einer Wälzlinie (26) der Zahnstange (7) mit dem Wälzkreis (25) des Zahnrads (8) aufweist, die die Zahnstange (7) verschieblich führt und mit dem Zahnrad (8) in Eingriff hält.

10. Trommelbremse nach Anspruch 1, **dadurch gekennzeichnet, dass** Betätigungskräfte, die die beiden Zahnstangen (7) bei Betätigung der Trommelbremse (1) auf die Bremsbacken (2) ausüben, eine gemeinsame Wirkungslinie (22) aufweisen.

11. Trommelbremse nach Anspruch 1, **dadurch gekennzeichnet, dass** eine Zahnstange (7) eine Wälzlagerung (27) aufweist, die in Längsrichtung der Zahnstange (7) in Bezug auf die Eingriffsstelle (28) einer Zahnstange (7) mit dem Zahnrad (8) von der mit der Zahnstange (7) gekoppelten Bremsbacke (2) weg versetzt ist.

12. Trommelbremse nach Anspruch 1, **dadurch gekennzeichnet, dass** die Zahnstange (7) Wälzlagerungen (30, 31) beiderseits der Eingriffsstelle (28) mit dem Zahnrad (8) aufweist, die die Zahnstange (7) sowohl in Richtung zum als auch in Richtung vom Zahnrad (8) weg abstützen.

## Claims

1. Drum brake having two brake pads (2) which, for the actuation of the drum brake (1), can be pressed against a brake drum (3) by means of an actuating device (21), with the actuating device (21) having a toothed wheel (8), which can be driven in rotation, and two toothed racks (7) which mesh with the toothed wheel (8) at opposite sides, **characterized in that** the toothed racks (7) are coupled at one end to actuating levers (6) which are pivotably mounted at the other end on a support plate (4) and which act on brake pads (2) which are guided on the support plate (4) so as to be movable radially with respect to the brake drum (3).

2. Drum brake according to Claim 1, **characterized in that** the toothed racks (7) and the toothed wheel (8) which meshes with said toothed racks (7) have spur toothings (17).

3. Drum brake according to Claim 1, **characterized in that** the toothed racks (7) have rectilinear guides (27, 29, 30, 31) in the tangential direction of the toothed wheel (8) which meshes with said toothed racks (7).

4. Drum brake according to Claim 1, **characterized in that** the actuating device (21) has a gear mechanism (11) with helical toothings (16).

5. Drum brake according to Claim 1, **characterized in that** the actuating device (21) has exclusively linear transmission elements.

6. Drum brake according to Claim 1, **characterized in that** the actuating device (21) has an immobilization device (18, 20).

7. Drum brake according to Claim 1, **characterized in that** the lines of action (22) of the actuating forces which, during an actuation of the drum brake (1), are exerted by the two toothed racks (7) on the brake pads (2) lie on a line.

8. Drum brake according to Claim 1, **characterized in that** a line of action (22) of an actuating force which, during an actuation of the drum brake (1), is exerted by one of the two toothed racks (7) on that brake pad (2) which is coupled thereto runs tangentially with respect to a pitch circle (25) of the toothed wheel (8) which meshes with the two toothed racks (7).

9. Drum brake according to Claim 8, **characterized in that** the toothed rack (7) has a rolling mount (29) on an imaginary radial line of the toothed wheel (8), which meshes with the toothed rack (7), at the point of contact (28) of a pitch line (26) of the toothed rack (7) with the pitch circle (25) of the toothed wheel (8), which rolling mount (29) guides the toothed rack (7) in a movable fashion and holds said toothed rack (7) in engagement with the toothed wheel (8).

10. Drum brake according to Claim 1, **characterized in that** actuating forces which are exerted, during an actuation of the drum brake (1), by the two toothed racks (7) on the brake pads (2) have a common line of action (22).

11. Drum brake according to Claim 1, **characterized in that** a toothed rack (7) has a rolling mount (27) which is offset, with respect to the point of engagement (28) of a toothed rack (7) with the toothed wheel (8), in the longitudinal direction of the toothed rack (7) away from the brake pad (2) which is coupled to the toothed rack (7).

12. Drum brake according to Claim 1, **characterized in that** the toothed rack (7) has rolling mounts (30, 31) at both sides of the point of engagement (28) with the toothed wheel (8), which rolling mounts (30, 31) support the toothed rack (7) both in the direction of the toothed wheel (8) and also in the direction away from the toothed wheel (8).

## Revendications

1. Frein à tambour comprenant deux segments de frein (2) qui peuvent être comprimés contre un tambour de frein (3) avec un dispositif d'actionnement (21) afin d'actionner le frein à tambour (1), le dispositif d'actionnement (21) présentant une roue dentée (8) pouvant être menée en rotation et deux crémaillères (7) qui s'engrènent avec la roue dentée (8) au niveau des côtés opposés, **caractérisé en ce que** les crémaillères (7) sont couplées à une extrémité avec des leviers d'actionnement (6) dont l'autre extrémité est logée de manière pivotante sur une plaque porteuse (4), lesquels agissent sur les segments de frein (2) qui peuvent coulisser sur la plaque porteuse (4) dans le sens radial par rapport au tambour de frein (3).

2. Frein à tambour selon la revendication 1, **caractérisé en ce que** les crémaillères (7) et la roue dentée (8) qui s'engrène avec elles présentent des dentures droites (17).

3. Frein à tambour selon la revendication 1, **caractérisé en ce que** les crémaillères (7) présentent des guides droits (27, 29, 30, 31) dans la direction tangentielle à la roue dentée (8) qui s'engrène avec elles.

4. Frein à tambour selon la revendication 1, **caractérisé en ce que** le dispositif d'actionnement (21) présente un engrenage (11) à dentures hélicoïdales (16).

5. Frein à tambour selon la revendication 1, **caractérisé en ce que** le dispositif d'actionnement (21) présente exclusivement des éléments de transmission linéaires.

6. Frein à tambour selon la revendication 1, **caractérisé en ce que** le dispositif d'actionnement (21) présente un dispositif de blocage (18, 20).

7. Frein à tambour selon la revendication 1, **caractérisé en ce que** les lignes d'action (22) des forces d'actionnement exercées par les deux crémaillères (7) sur les segments de frein (2) lors de l'actionnement du frein à tambour (1) se trouvent sur une ligne.

8. Frein à tambour selon la revendication 1, **caractérisé en ce qu'**une ligne d'action (22) d'une force d'actionnement exercée par une des deux crémaillères (7) sur le segment de frein (2) couplé à celle-ci lors de l'actionnement du frein à tambour (1) est tangentielle à un cercle de roulement (25) de la roue dentée (8) qui s'engrène avec les deux crémaillères (7).

9. Frein à tambour selon la revendication 8, **caractérisé en ce que** la crémaillère (7) présente un palier de roulement (29) sur une radiale imaginaire de la roue dentée (8) qui s'engrène avec la crémaillère (7), au point de contact (28) d'une ligne de roulement (26) de la crémaillère (7) avec le cercle de roulement (25) de la roue dentée (8), lequel est guidé de manière coulissante par le crémaillère (7) et est maintenu en prise avec la roue dentée (8).

10. Frein à tambour selon la revendication 1, **caractérisé en ce que** les forces d'actionnement exercées par les deux crémaillères (7) sur les segments de frein (2) lors de l'actionnement du frein à tambour (1) présentent une ligne d'action commune (22).

11. Frein à tambour selon la revendication 1, **caractérisé en ce qu'**une crémaillère (7) présente un palier de roulement (27) qui est espacé du segment de frein (2) couplé avec la crémaillère (7) dans le sens longitudinal de la crémaillère (7) par rapport au point de prise (28) d'une crémaillère (7) avec la roue dentée (8).

12. Frein à tambour selon la revendication 1, **caractérisé en ce que** la crémaillère (7) présente des paliers de roulement (30, 31) des deux côtés du point de prise (28) avec la roue dentée (8), lesquels soutiennent la crémaillère (7) à la fois en direction de la roue dentée (8) et dans la direction opposée.
